# FASCICULE DE BREVET EUROPEEN

(11) **EP 2 847 840 B1**
(45) Date de publication et mention de la délivrance du brevet: **05.07.2017**
(21) Numéro de dépôt: 13719867.7
(22) Date de dépôt: 02.05.2013
(51) Int. Cl.: H02H 9/04, H02H 5/10, H02H 11/00, H04M 1/74, H04M 11/06

(54) **DISPOSITIF DE PROTECTION D'AU MOINS UN APPAREIL ÉLECTRIQUE CONTRE UNE SURTENSION GÉNÉRÉE PAR UN IMPACT DE FOUDRE**
VORRICHTUNG ZUM SCHUTZ MINDESTENS EINER ELEKTRISCHEN VORRICHTUNG GEGEN ÜBERSPANNUNGEN DURCH BLITZSCHLAG
DEVICE FOR PROTECTING AT LEAST ONE ELECTRICAL APPARATUS AGAINST OVERVOLTAGE GENERATED BY A LIGHTNING STRIKE

(30) Priorité: 10.05.2012 FR 1254295
(43) Date de publication de la demande: 18.03.2015
(73) Titulaire: Sagemcom Broadband SAS, 92500 Rueil-Malmaison (FR)
(72) Inventeur: DANGY-CAYE, Nicolas, F-92500 Rueil Malmaison (FR); JAULIN, Jean-Philippe, F-92500 Rueil Malmaison (FR)
(74) Mandataire: Lavialle, Bruno François Stéphane
(86) Numéro de dépôt international: PCT/EP2013/059189
(87) Numéro de publication internationale: WO 2013/167470

(56) Documents cités:
- EP-A1- 1 437 814
- US-A- 4 876 713
- US-A1- 2011 187 552
- US-B1- 6 229 682

## Description

L'invention concerne un dispositif de protection d'au moins un appareil électrique contre une surtension générée par un impact de foudre

### ARRIERE PLAN DE L'INVENTION

La plupart des appareils électriques domestiques sont très sensibles aux surtensions générées par la foudre, et doivent être protégés contre ces surtensions. En particulier, les équipements de type « passerelle résidentielle » ou « modem », ou plus généralement, les équipements permettant de transférer des données sur une ligne téléphonique, sont particulièrement exposés à des impacts de foudre pouvant survenir sur des éléments conducteurs de la ligne téléphonique.

Pour protéger ces appareils électriques, on les munit fréquemment de dispositifs de protection dont le but est de limiter la surtension générée en entrée des appareils électriques, et d'évacuer les courants électriques générés par la foudre vers la terre, dans laquelle les courants vont se disperser. Pour cela, les prises électriques de distribution de courant (prises femelles murales) comportent une borne de terre, reliée à une prise de terre, généralement constituée d'un élément conducteur enfoui dans le sol.

Dans ce type d'installation, il est primordial que les bornes de terre des prises électriques de distribution soient effectivement reliées à la terre. En effet, dans le cas où un appareil électrique est connecté à une ligne touchée par la foudre, et que cet appareil comporte un dispositif de protection mais que l'installation est défaillante, les courants de foudre peuvent être évacués vers d'autres appareils électriques, ce qui risque fortement de les endommager, et éventuellement de provoquer un incendie. En outre, les courants de foudre, en se propageant, risquent d'atteindre des parties métalliques de l'installation (bornes de terre d'autres prises, châssis de l'appareil ou d'autres équipements, etc.) accessibles aux personnes, ce qui représente un danger potentiel important.

Le document EP1437814 Al décrit un dispositif de protection d'un appareil électrique connecté à une ligne de communication contre une surtension générée par un impact de foudre survenant sur la ligne de communication.

### OBJET DE L'INVENTION

L'invention a pour objet un dispositif de protection contre la foudre fournissant, aussi bien aux appareils électriques de l'installation qu'aux utilisateurs, une protection accrue contre les impacts de foudre.

### RESUME DE L'INVENTION

En vue de la réalisation de ce but, on propose un dispositif de protection d'au moins un appareil électrique connecté à une ligne de communication contre une surtension générée par un impact de foudre survenant sur la ligne de communication, le dispositif comportant une prise de raccordement du dispositif à une prise de distribution d'un réseau d'alimentation et un organe de liaison de l'appareil au dispositif de protection, l'organe de liaison étant destiné à connecter l'appareil électrique à la ligne de communication via le dispositif, la prise de raccordement comprenant un élément de connexion à une borne de terre de la prise de distribution et le dispositif comportant un composant d'évacuation relié à l'organe de liaison et à l'élément de connexion et agencé pour évacuer vers la borne de terre un courant de foudre résultant de la surtension. Selon l'invention, le dispositif comporte un premier interrupteur qui est monté entre le composant d'évacuation et l'élément de connexion et qui est commandé par un organe de détection de terre dans la prise de distribution de manière à fermer le premier interrupteur en présence de terre et à ouvrir le premier interrupteur en l'absence de terre.

Ainsi, en présence de terre, le composant d'évacuation est relié à la borne de terre de la prise de distribution via l'élément de connexion et donc à la terre, ce qui lui permet d'évacuer vers la terre le courant de foudre. En l'absence de terre, le composant d'évacuation n'est plus relié à l'élément de connexion, et donc le courant de foudre ne peut se propager vers d'autres appareils électriques ou d'autres éléments conducteurs accessibles aux personnes via la borne de terre.

L'invention sera mieux comprise à la lumière de la description qui suit d'un mode de mise en oeuvre particulier non limitatif de l'invention.

### BREVE DESCRIPTION DES DESSINS

Il sera fait référence aux dessins annexés, parmi lesquels :
- la figure 1 représente la manière dont est connecté un dispositif de protection selon l'invention à une prise de distribution d'un réseau d'alimentation et à un appareil électrique, ici une passerelle résidentielle,
- les figures 2 à 4 représentent schématiquement les agencements des principaux éléments composant le dispositif de protection lorsque le dispositif n'est pas connecté à une prise de distribution munie d'une borne de terre, au moment de la connexion du dispositif à une telle prise, et après la connexion.

### DESCRIPTION DETAILLEE DE L'INVENTION

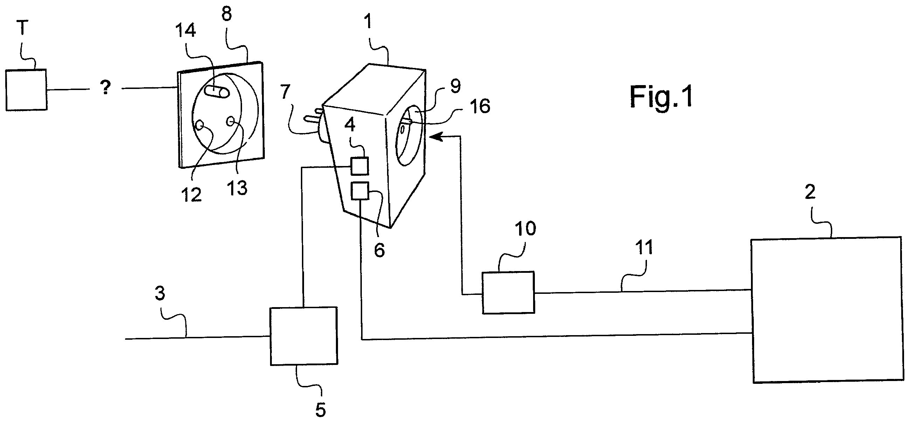

En référence à la figure 1, le dispositif de protection de l'invention décrit ici est un parafoudre 1 auquel est connectée une passerelle résidentielle 2 de liaison à Internet, par exemple de type ADSL.

Le parafoudre 1 est destiné à protéger la passerelle résidentielle 2 contre des impacts de foudre pouvant survenir sur une ligne de communication, ici une ligne téléphonique 3 à laquelle est connectée la passerelle 2 pour émettre et recevoir des signaux de données. La ligne téléphonique 3 comporte deux éléments conducteurs mais est représentée par un trait unique à la figure 1.

Le parafoudre 1 comprend tout d'abord un premier port 4 de connexion téléphonique pour connecter le parafoudre 1 à une prise téléphonique 5 murale permettant d'accéder à la ligne téléphonique 3, un second port 6 de connexion téléphonique, relié au port 4, pour connecter le parafoudre 1 à la passerelle 2 pour que celle-ci accède aux signaux de données, une prise de raccordement 7 mâle destinée à être insérée dans la prise électrique de distribution 8 murale reliée à une ligne basse tension du réseau électrique, et une prise électrique d'alimentation 9 assurant une réplication de la prise électrique murale (même tension et même fréquence). La passerelle 2 est reliée à cette prise électrique d'alimentation 9 via un boîtier d'alimentation 10 qui est relié par un câble d'alimentation 11 à la passerelle 2 pour alimenter celle-ci. Le boîtier d'alimentation 10 est agencé pour transformer le courant disponible au niveau de la prise de distribution 8 en un courant apte à l'alimentation de la passerelle 2.

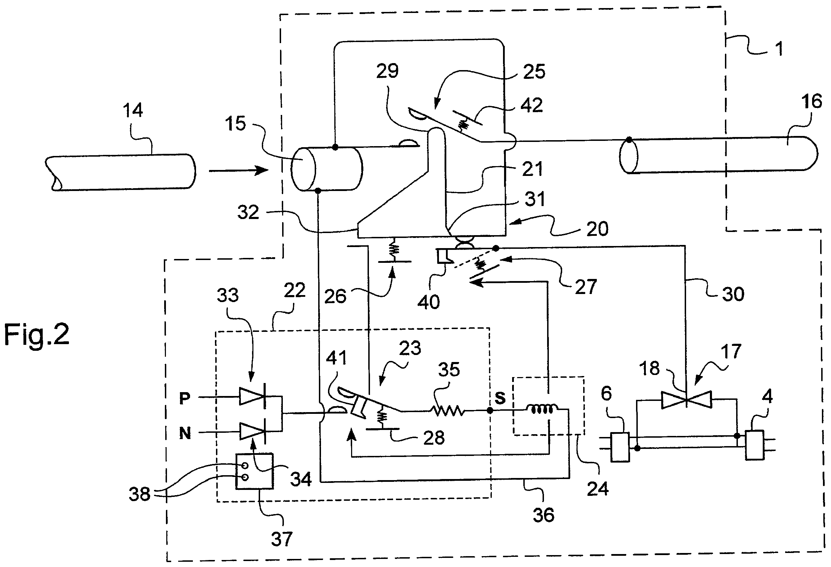

Outre une borne de phase 12 et une borne de neutre 13, la prise de distribution 8 comporte une borne de terre 14 mâle possiblement reliée à une prise de terre T. Pour coopérer avec la borne de terre 14 de la prise de distribution 8, la prise de raccordement 7 comporte une borne de terre femelle 15 (visible aux figures 2, 3, 4). De même, la prise d'alimentation 9 comporte une borne de terre mâle 16 destinée à coopérer avec une borne de terre femelle d'une prise d'un équipement raccordé au parafoudre 1 (ici, cet équipement est la passerelle 2).

En référence aux figures 2 à 4, le parafoudre 1 comporte un éclateur à gaz 17 comprenant une électrode de terre 18. L'éclateur à gaz est monté entre les ports 4 et 6, en parallèle de deux éléments conducteurs connectés aux éléments conducteurs de la ligne 3.

Lorsqu'un impact de foudre survient sur la ligne téléphonique 3 et qu'une surtension est générée, l'éclateur à gaz 17 protège les composants de la passerelle 2 reliée à la ligne 3 en évacuant par l'électrode de terre 18 le courant de foudre résultant.

Le parafoudre 1 comprend de plus un premier interrupteur mécanique 20 pour connecter ou déconnecter l'électrode de terre 18 de l'éclateur 17 de la borne de terre 15 de la prise de raccordement 7, un élément mobile de commande 21, des moyens de détection 22 de la connexion ou non de la borne de terre 14 de la prise de distribution à la terre T, ces moyens de détection comprenant notamment un deuxième interrupteur mécanique 23, un électroaimant 24 commandé par les moyens de détection 22, et un troisième interrupteur mécanique 25 pour connecter ou déconnecter la borne de terre 15 de la prise de raccordement 7 et la borne de terre 16 de la prise d'alimentation 9 du parafoudre 1.

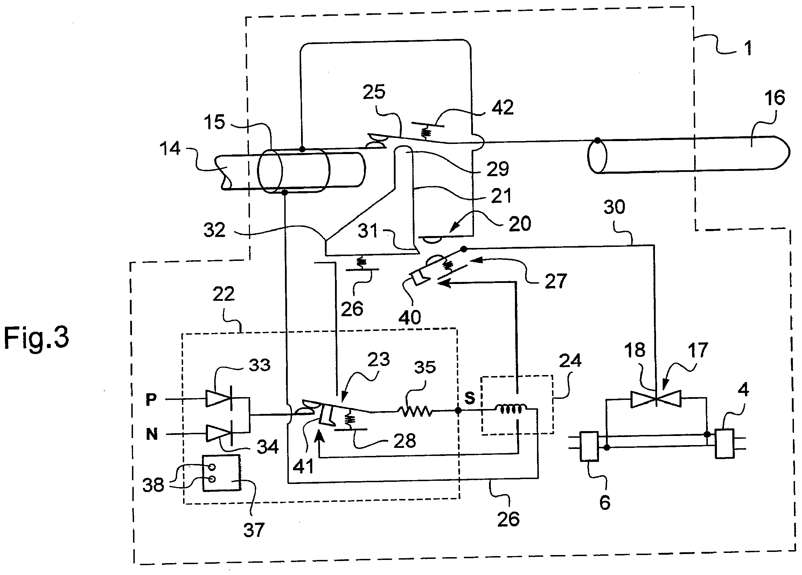

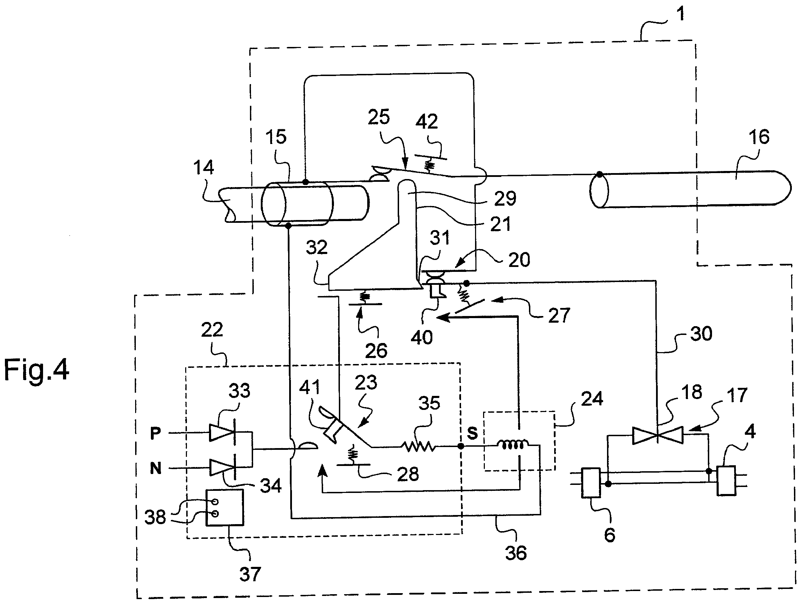

L'élément mobile de commande 21 est mobile entre une position inactive (visible à la figure 2) et une position active (visible aux figures 3 et 4). Le contacteur mobile 21 est en position active lorsqu'une borne mâle est insérée dans la borne de terre 15 de la prise de raccordement 7, et en position inactive dans le cas contraire. La position active correspond donc à la position de l'élément de commande mobile 21 lorsque le parafoudre 1 est installé sur une prise de distribution 8 comportant une borne de terre 14. La position inactive correspond quant à elle à la position de l'élément de commande mobile 21 lorsque le parafoudre 1 n'est pas installé sur une prise de distribution, ou lorsque le parafoudre 1 est installé sur une prise de distribution ne comportant pas de borne de terre. L'élément mobile de commande 21 est rappelé vers sa position inactive par un premier ressort 26. Lorsqu'il est en position inactive, l'élément mobile de commande 21 n'agit sur aucun des interrupteurs 20, 23, 25. Le premier interrupteur 20 est alors en position fermée, position vers laquelle il est rappelé par un deuxième ressort 27, le deuxième interrupteur 23 est alors en position ouverte, position vers laquelle il est rappelé par un troisième ressort 28, et le troisième interrupteur 25 est en position ouverte, position dans laquelle il est maintenu par l'action d'une première excroissance 29 de l'élément mobile de commande 21.

Lorsqu'il est fermé, le premier interrupteur 20 relie la borne de terre 15 de la prise de raccordement 7 et l'éclateur 17 grâce à une première liaison 30. Lorsqu'il passe de la position inactive à la position active, l'élément mobile de commande 21 ouvre le premier interrupteur 20 par l'action d'une seconde excroissance mécanique 31, et ferme le deuxième interrupteur 23 par l'action d'une troisième excroissance 32 de l'élément mobile de commande 21. Lorsque l'élément mobile de commande 21 est en position active, l'interrupteur 25 est fermé par l'action d'un quatrième ressort 42.

Les moyens de détection 22 comportent une entrée de phase P et une entrée de neutre N, connectées respectivement à la borne de phase 12 et à la borne de neutre 13 de la prise de distribution 8 (via des bornes de phase et de neutre de la prise de raccordement 7 non visibles sur les figures) et une sortie S de commande de l'électroaimant. Les moyens de détection 22 comportent en outre deux diodes 33, 34 dont les anodes sont connectées aux entrées de phase P et de neutre N, et les cathodes sont reliées entre elles et connectées avec le deuxième interrupteur 23, lui-même connecté en série avec une résistance 35 et l'électroaimant 24. L'extrémité de l'électroaimant 24 non connecté à la résistance 35 est connectée à la borne de terre 15 de la prise de raccordement 7 par une seconde liaison 36. Enfin, les moyens de détection 22 comportent des moyens d'indication 37, visibles par un utilisateur de la passerelle, comprenant deux diodes 38, l'une des diodes 38 produisant un signal lumineux d'une certaine couleur en présence de terre T et l'autre, un signal lumineux d'une couleur différente en l'absence de terre T.

On décrit maintenant plus en détail la façon dont coopèrent les différents éléments décrits ci-dessus.

Lorsque le parafoudre 1 est connecté à la prise de distribution 8, l'élément mobile de commande 21 est amené en position active (figure 3) par la borne de terre 14 de la prise de distribution 8. La seconde excroissance 31 de l'élément de commande mobile 21 ouvre le premier interrupteur 20 : l'électrode de terre 18 de l'éclateur 17 n'est donc pas connectée à la terre T. La troisième excroissance 32 de l'élément mobile de commande 21 ferme le deuxième interrupteur 23. Si la borne de terre de la prise de distribution 8 est connectée effectivement à la terre T, l'électroaimant 24 est relié à la terre T donc à une masse électrique, et donc un courant circule entre la phase P et cette masse électrique (on a relié la phase et le neutre aux moyens de détection 22, dans le cas où les bornes de phase et de neutre étaient inversées). Ce courant alimente l'électroaimant 24 qui agit sur le premier et le deuxième interrupteur 20, 23 par une action mécanique sur des poussoirs 40, 41 du premier et du deuxième interrupteur. Le premier interrupteur 20 est donc refermé ce qui connecte l'éclateur 17 à la terre T (figure 4). Le deuxième interrupteur 23 est ouvert ce qui coupe la circulation de courant dans l'électroaimant et le désactive. Ainsi, l'éclateur 17 est connecté à la terre T pour évacuer efficacement un courant de foudre. La première diode 38 produit un signal lumineux pour avertir l'utilisateur de la passerelle 2 que le parafoudre est relié à la terre. Si la borne de terre 14 de la prise de distribution 8 n'est pas connectée à la terre T, l'électroaimant 24 n'est pas relié à une masse électrique mais au contraire, est portée à une impédance très importante, ce qui empêche le courant de circuler et donc prive d'alimentation l'électroaimant 24. Le premier interrupteur reste donc fermé et l'éclateur 17 n'est pas connecté à la borne de terre de la prise de raccordement. La seconde diode 38 produit un signal lumineux pour avertir l'utilisateur de la passerelle que le parafoudre n'est pas relié à la terre.

De plus, la borne de terre de la prise de distribution 8 en repoussant l'élément mobile de commande 21 permet la fermeture du troisième interrupteur 25, ce qui connecte la borne de terre 15 de la prise de raccordement 7 et la borne de terre 14 de la prise d'alimentation 8 du parafoudre 1. Ainsi, tant que le parafoudre 1 n'est pas connecté à une prise de distribution muni d'une borne de terre, l'élément de connexion 15 et l'éclateur ne sont pas reliés à la borne de terre 16 de la prise d'alimentation 9. En cas d'impact de foudre, la borne de terre d'alimentation du parafoudre, possiblement accessible aux personnes, n'est donc pas soumise au courant de foudre, ce qui représente une amélioration importante pour la sécurité des personnes.

Avantageusement, on prévoit de rendre impossible tout contact physique de l'utilisateur avec une partie conductrice de la borne de terre 15 de la prise de raccordement 7, notamment lorsque cette prise de raccordement 7 n'est pas connectée à la prise d'alimentation 8. En effet, lorsque le parafoudre 1 n'est pas connecté à une prise d'alimentation, la borne de terre 15 est par défaut connecté à l'électrode de terre 18 de l'éclateur 17. Si un impact de foudre survient sur la ligne téléphonique 3, le courant de foudre se propagera vers la borne de terre 15, ce qui présente un risque pour l'utilisateur en cas de contact. Pour interdire un tel contact, on prévoit de positionner la partie conductrice de la borne de terre 15 femelle à l'intérieur de celle-ci, à une distance suffisante de la surface de la prise 7 pour que la partie conductrice ne soit pas accessible par un doigt de l'utilisateur.

Une particularité avantageuse de l'invention concerne la consommation en énergie électrique négligeable du dispositif de protection de l'invention, dont le fonctionnement est basé essentiellement sur l'utilisation d'énergie mécanique et une faible portion d'énergie électrique utilisée transitoirement lors de la détection de terre. En effet, les interrupteurs mécaniques (20, 23, 25) sont actionnés par une énergie mécanique fournie par les ressorts (26, 27, 28, 42), la pièce mobile (21), les excroissances (29, 31, 32) et les poussoirs (40, 41) qui sont actionnés par l'électro-aimant (24). Le déplacement de l'élément mobile (21) et l'action des excroissances associées (29, 31, 32) sur les interrupteurs (20, 23, 25) est issu de l'insertion ou de l'extraction de la borne de terre de la prise de distribution dans le dispositif. L'énergie nécessaire à cette insertion ou à cette extraction provient de l'action manuelle d'un utilisateur. La détection de terre conséquente à l'insertion du dispositif dans une prise de distribution est consommatrice d'une quantité négligeable d'énergie électrique. En effet, en présence de terre un courant circule dans l'électroaimant (24) qui actionne les poussoirs (40, 41) fermant d'une part l'interrupteur (20) et ouvrant d'autre part l'interrupteur (23), ce qui a pour conséquence l'arrêt de la circulation du courant dans l'électro-aimant, rendant ainsi nulle la consommation liée à la détection de terre. Réciproquement, on peut noter que sans présence de terre, le détecteur est peu consommateur car le courant traversant l'électro-aimant est faible voire nul. Finalement, la seule partie consommatrice du dispositif concerne les moyens d'indication permettant d'indiquer à l'utilisateur l'absence ou la présence de terre, ou la présence de terre défectueuse.

L'invention n'est pas limitée au mode de réalisation particulier qui vient d'être décrit, mais, bien au contraire, couvre toute variante entrant dans le cadre de l'invention telle que définie par les revendications.

Bien que l'on ait mis en oeuvre le dispositif de l'invention dans un boîtier intégrant le parafoudre et connecté à un boîtier d'alimentation, l'invention s'applique à des blocs multiprises équipés de parafoudres ou autre. Il est aussi bien sûr possible d'intégrer le parafoudre et le boîtier d'alimentation au sein d'un même boîtier.

Bien que l'on ait choisi de commander le premier interrupteur mécanique par l'intermédiaire de l'élément de commande mobile, des moyens de détection et de l'électroaimant, en ouvrant le premier interrupteur lors de l'installation du parafoudre puis en le refermant lorsque la connexion à la terre est détectée, il est possible de commander directement cet interrupteur par une action directe de la borne de terre lors de l'installation du parafoudre.

Il est bien sûr aussi possible de prévoir un parafoudre ne comportant pas tous les éléments décrits mais seulement certains d'entre eux. On pourra prévoir par exemple de n'intégrer au parafoudre que les moyens de détection, sans actionner d'interrupteur pour couper la connexion entre l'éclateur et la borne de terre de la prise de raccordement, ou de ne pas utiliser de moyens d'indication, etc. Ces moyens d'indication peuvent être de toute nature, fournissant une indication visuelle ou sonore, ou tout autre type de signal à destination d'un utilisateur.

On pourra aussi prévoir un parafoudre ne comprenant pas de moyens de détection de terre ni d'interrupteur. Un tel parafoudre comporterait une prise de raccordement à une prise de distribution, des ports de connexion téléphonique, un éclateur ainsi qu'une prise d'alimentation assurant une réplication de la prise de distribution mais dépourvue de borne de terre. Dans un tel parafoudre, un courant de foudre résultant d'une surtension est évacué directement vers la borne de terre de la prise de raccordement et donc vers la borne de terre de la prise de distribution même si l'installation n'est pas munie d'une terre ou bien est munie d'une terre défaillante. Cependant, le courant de foudre ne risque pas d'endommager un appareil électrique connecté au parafoudre via la prise d'alimentation, celle-ci ne comportant pas de prise de terre. Les interrupteurs peuvent être actionnés mécaniquement par tout dispositif mobile susceptible de coopérer avec une borne de terre.

L'invention est applicable à tous les standards de prise de distribution équipée d'une terre et notamment les standards américain, anglais, allemand, suisse...

Bien que l'on ait ici mis en oeuvre l'invention dans une application où la ligne de communication est une ligne téléphonique, la ligne de communication peut être une ligne de communication quelconque sur laquelle chemine des données : bus numérique, etc.

## Revendications

1. Dispositif de protection d'au moins un appareil électrique (2) connecté à une ligne de communication contre une surtension générée par un impact de foudre survenant sur la ligne de communication, le dispositif comportant une prise de raccordement (7) du dispositif à une prise de distribution (8) d'un réseau d'alimentation et un organe de liaison (6) de l'appareil (2) au dispositif de protection, l'organe de liaison (6) étant destiné à connecter l'appareil électrique à la ligne de communication via le dispositif de protection, la prise de raccordement (7) comprenant un élément de connexion (15) à une borne de terre (14) de la prise de distribution (8) et le dispositif comportant un composant d'évacuation (17) relié à l'organe de liaison et à l'élément de connexion (15) et agencé pour évacuer vers la borne de terre (14) un courant de foudre résultant de la surtension, **caractérisé en ce que** le dispositif comporte un premier interrupteur (20) qui est monté entre le composant d'évacuation (17) et l'élément de connexion (15) et qui est commandé par un organe de détection (21, 22, 24) de terre dans la prise de distribution (8) de manière à fermer le premier interrupteur (20) en présence de terre et à ouvrir le premier interrupteur (20) en l'absence de terre.

2. Dispositif selon la revendication 1, dans lequel l'organe de détection (21, 22, 24) comprend des moyens de détection (22) pour détecter si la borne de terre (14) de la prise de distribution (8) est ou non reliée à la terre, et des moyens d'actionnement (24) pour fermer le premier interrupteur (20) si la borne de terre (14) est reliée à la terre.

3. Dispositif selon la revendication 2, dans lequel l'interrupteur (20) est un interrupteur mécanique, et les moyens d'actionnement (24) comprennent un électroaimant (24).

4. Dispositif selon la revendication 3, dans lequel les moyens de détection (22) sont connectés à au moins une phase de la prise de distribution (8) autre que la borne de terre (14) pour générer un courant d'alimentation de l'électroaimant (24) lorsque la borne de terre (14) est reliée à la terre, l'électroaimant (24) fermant alors le premier interrupteur (20).

5. Dispositif selon la revendication 2, dans lequel l'organe de détection (21, 22, 24) comporte en outre un deuxième interrupteur (23) et un élément mobile de commande (21) agencé pour être déplaçable par la borne de terre de la prise de distribution (8) de manière à fermer le deuxième interrupteur (23) au moment où la prise de raccordement (7) du dispositif est connectée à la prise de distribution (8).

6. Dispositif selon la revendication 5, dans lequel l'élément mobile de commande (21) ouvre en outre le premier interrupteur (20) lorsqu'il est déplacé par la borne de terre (14) de la prise de distribution (8).

7. Dispositif selon les revendications 4 et 6, dans lequel l'électroaimant (24), lorsqu'il est alimenté, ferme en outre le deuxième interrupteur (23).

8. Dispositif selon la revendication 1, dans lequel le dispositif comporte un troisième interrupteur (25) connectant l'élément de connexion (15) à une borne de terre (16) d'une prise d'alimentation (9) du dispositif, l'interrupteur (25) étant agencé pour être fermé, lorsque le dispositif est connecté à la prise de distribution (8), par l'action de la borne de terre (14) de ladite prise (8), et ouvert sinon.

9. Dispositif selon la revendication 1, comportant en outre une prise d'alimentation (9) assurant une réplication de la prise de distribution (8), la prise (9) étant dépourvue de borne de terre.

10. Dispositif selon les revendications 5 et 8, dans lequel le troisième interrupteur (25) est ouvert ou fermé par l'élément mobile de commande (21), l'élément mobile (21) étant actionné par la borne de terre (14) de la prise de distribution (8).

11. Dispositif selon la revendication 1, comportant en outre des moyens d'indication (37, 38) reliés à l'organe de détection (21, 22, 24) pour générer un signal indiquant la présence ou l'absence de terre.

12. Dispositif selon la revendication 1, dans lequel l'élément de connexion (15) est une borne femelle ayant une partie conductrice située à l'intérieur de la borne de manière à rendre impossible un contact physique entre la partie conductrice et un utilisateur.

13. Dispositif de protection d'au moins un appareil électrique (2) connecté à une ligne de communication contre une surtension générée par un impact de foudre survenant sur la ligne de communication, le dispositif comportant une prise de raccordement (7) du dispositif à une prise de distribution (8) d'un réseau d'alimentation et un organe de liaison (6) de l'appareil (2) au dispositif de protection, l'organe de liaison (6) étant destiné à connecter l'appareil électrique à la ligne de communication via le dispositif de protection, la prise de raccordement (7) comprenant un élément de connexion (15) à une borne de terre (14) de la prise de distribution (8) et le dispositif comportant un composant d'évacuation (17) relié à l'organe de liaison et à l'élément de connexion (15) et agencé pour évacuer vers la borne de terre (14) un courant de foudre résultant de la surtension, **caractérisé en ce que** le dispositif comporte en outre une ou plusieurs prises d'alimentation (9) assurant une réplication de la prise de distribution (8), chacune de ces prises (9) étant dépourvue de borne de terre.

## Patentansprüche

1. Vorrichtung zum Schutz mindestens eines an eine Kommunikationsleitung angeschlossenen Elektrogerätes (2) gegen eine Überspannung, die durch einen Blitzschlag erzeugt wird, der auf der Kommunikationsleitung auftritt, wobei die Vorrichtung einen Steckverbinder (7) zum Anschluss der Vorrichtung an einen Verteilungsanschluss (8) eines Stromversorgungsnetzes umfasst, sowie ein Verbindungsorgan (6) zur Verbindung des Gerätes (2) mit der Schutzvorrichtung, wobei das Verbindungsorgan (6) dazu bestimmt ist, das Elektrogerät über die Schutzvorrichtung an die Kommunikationsleitung anzuschließen, wobei der Steckverbinder (7) ein Anschlusselement (15) zum Anschluss an eine Erdungsklemme (14) des Verteilungsanschlusses (8) umfasst und die Vorrichtung eine Ableitungskomponente (17) umfasst, die mit dem Verbindungsorgan und dem Anschlusselement (15) verbunden und so ausgebildet ist, dass sie einen aus der Überspannung resultierenden Blitzstrom zur Erdungsklemme (14) ableitet, **dadurch gekennzeichnet, dass** die Vorrichtung einen ersten Unterbrecher (20) umfasst, der zwischen der Ableitungskomponente (17) und dem Anschlusselement (15) geschaltet ist und der von einem Erfassungsorgan (21, 22, 24) zur Erfassung von Erde in dem Verteilungsanschluss (8) derart gesteuert wird, dass es den ersten Unterbrecher (20) bei Vorhandensein von Erde schließt und den ersten Unterbrecher (20) bei Nichtvorhandensein von Erde öffnet.

2. Vorrichtung nach Anspruch 1, bei der das Erfassungsorgan (21, 22, 24) Erfassungsmittel (22) umfasst, um zu erfassen, ob die Erdungsklemme (14) des Verteilungsanschlusses (8) mit der Erde verbunden ist oder nicht, sowie Betätigungsmittel (24) zum Schließen des ersten Unterbrechers (20), wenn die Erdungsklemme (14) mit der Erde verbunden ist.

3. Vorrichtung nach Anspruch 2, bei der der Unterbrecher (20) ein mechanischer Unterbrecher ist und die Betätigungsmittel (24) einen Elektromagneten (24) umfassen.

4. Vorrichtung nach Anspruch 3, bei der die Erfassungsmittel (22) mit mindestens einer anderen Phase des Verteilungsanschlusses (8) als der Erdungsklemme (14) verbunden sind, um einen Versorgungsstrom zur Versorgung des Elektromagneten (24) zu erzeugen, wenn die Erdungsklemme (14) mit der Erde verbunden ist, wobei der Elektromagnet (24) dann den ersten Unterbrecher (20) schließt.

5. Vorrichtung nach Anspruch 2, bei der das Erfassungsorgan (21, 22, 24) ferner einen zweiten Unterbrecher (23) umfasst, sowie ein bewegliches Steuerelement (21), das so ausgebildet ist, dass es durch die Erdungsklemme des Verteilungsanschlusses (8) derart verschiebbar ist, dass es den zweiten Unterbrecher (23) zu dem Zeitpunkt schließt, zu dem der Steckverbinder (7) der Vorrichtung mit dem Verteilungsanschluss (8) verbunden ist.

6. Vorrichtung nach Anspruch 5, bei der das bewegliche Steuerelement (21) ferner den ersten Unterbrecher (20) öffnet, wenn es von der Erdungsklemme (14) des Verteilungsanschlusses (8) verschoben wird.

7. Vorrichtung nach den Ansprüche 4 und 6, bei der der Elektromagnet (24), wenn er gespeist wird, ferner den zweiten Unterbrecher (23) schließt.

8. Vorrichtung nach Anspruch 1, bei der die Vorrichtung einen dritten Unterbrecher (25) umfasst, der das Anschlusselement (15) mit einer Erdungsklemme (16) eines Versorgungsanschlusses (9) der Vorrichtung verbindet, wobei der Unterbrecher (25) so ausgebildet ist, dass er, wenn die Vorrichtung an den Verteilungsanschluss (8) angeschlossen ist, durch die Wirkung der Erdungsklemme (14) des genannten Anschlusses (8) geschlossen und ansonsten geöffnet wird.

9. Vorrichtung nach Anspruch 1, ferner umfassend einen Versorgungsanschluss (9), der eine Replikation des Verteilungsanschlusses (8) sicherstellt, wobei der Anschluss (9) ohne Erdungsklemme ist.

10. Vorrichtung nach den Ansprüchen 5 und 8, bei der der dritte Unterbrecher (25) von dem beweglichen Steuerelement (21) geöffnet oder geschlossen wird, wobei das bewegliche Element (21) von der Erdungsklemme (14) des Verteilungsanschlusses (8) betätigt wird.

11. Vorrichtung nach Anspruch 1, ferner umfassend Anzeigemittel (37, 38), die mit dem Erfassungsorgan (21, 22, 24) verbunden sind, um ein Signal zu erzeugen, welches das Vorhandensein oder Nichtvorhandensein von Erde anzeigt.

12. Vorrichtung nach Anspruch 1, bei der das Anschlusselement (15) ein weiblicher Anschluss ist, der einen leitenden Teil hat, der sich im Inneren des Anschlusses befindet, so dass ein physischer Kontakt zwischen dem leitenden Teil und einem Nutzer unmöglich wird.

13. Vorrichtung zum Schutz mindestens eines an eine Kommunikationsleitung angeschlossenen Elektrogerätes (2) gegen eine Überspannung, die durch einen Blitzschlag erzeugt wird, der auf der Kommunikationsleitung auftritt, wobei die Vorrichtung einen Steckverbinder (7) zum Anschluss der Vorrichtung an einen Verteilungsanschluss (8) eines Stromversorgungsnetzes umfasst, sowie ein Verbindungsorgan (6) zur Verbindung des Gerätes (2) mit der Schutzvorrichtung, wobei das Verbindungsorgan (6) dazu bestimmt ist, das Elektrogerät über die Schutzvorrichtung an die Kommunikationsleitung anzuschließen, wobei der Steckverbinder (7) ein Anschlusselement (15) zum Anschluss an eine Erdungsklemme (14) des Verteilungsanschlusses (8) umfasst und die Vorrichtung eine Ableitungskomponente (17) umfasst, die mit dem Verbindungsorgan und dem Anschlusselement (15) verbunden und so ausgebildet ist, dass sie einen aus der Überspannung resultierenden Blitzstrom zur Erdungsklemme (14) ableitet, **dadurch gekennzeichnet, dass** die Vorrichtung ferner einen oder mehrere Versorgungsanschlüsse (9) umfasst, die eine Replikation des Verteilungsanschlusses (8) sicherstellen, wobei jeder dieser Anschlüsse (9) ohne eine Erdungsklemme ist.

## Claims

1. A protection device for protecting at least one piece of electrical apparatus (2) connected to a transmission line against a voltage surge generated by lightning striking the transmission line, the device comprising a plug connector (7) for connecting the device to an outlet connector (8) of a power supply network and a connection member (6) for connecting the apparatus (2) to the protection device, the connection member (6) being designed to connect the electrical apparatus to the transmission line via the protection device, the plug connector (7) including a connection element (15) for connection to a ground terminal (14) of the outlet connector (8) and the device including a discharge component (17) connected to the connection member and to the connection element (15) and arranged to evacuate to the ground terminal (14) a lightning current resulting from the surge, the device being **characterized in that** it comprises a first switch (20) that is mounted between the discharge component (17) and the connection element (15) and that is controlled by a ground detector member (21, 22, 24) in the outlet connector (8) in such a manner as to close the first switch (20) in the presence of ground and to open the first switch (20) in the absence of ground.

2. A device according to claim 1, wherein the detector member (21, 22, 24) comprises detector means (22) for detecting whether or not the ground terminal (14) of the outlet connector (8) is connected to ground, and actuator means (24) for closing the first switch (20) if the ground terminal (14) is connected to ground.

3. A device according to claim 2, wherein the switch (20) is a mechanical switch, and the actuator means (24) comprise an electromagnet (24).

4. A device according to claim 3, wherein the detector means (22) are connected to at least one phase of the outlet connector (8) other than the ground terminal (14) so as to generate a power supply for the electromagnet (24) when the ground terminal (14) is connected to ground, the electromagnet (24) then closing the first switch (20).

5. A device according to claim 2, wherein the detector member (21, 22, 24) further comprises a second switch (23) and a movable control element (21) arranged to be movable by the ground terminal of the outlet connector (8) so as to close the second switch (23) when the plug connector (7) of the device is connected to the outlet connector (8).

6. A device according to claim 5, wherein the movable control element (21) also opens the first switch (20) when it is moved by the ground terminal (14) of the outlet connector (8).

7. A device according to claim 4 and claim 6, wherein the electromagnet (24), when powered, also closes the second switch (23).

8. A device according to claim 1, wherein the device comprises a third switch (25) connecting the connection element (15) to a ground terminal (16) of a power connector (9) of the device, the switch (25) being arranged to be closed by the action of the ground terminal (14) of said connector (8), when the device is connected to the outlet connector (8), and open if not.

9. A device according to claim 1, further comprising a power connector (9) for replicating the outlet connector (8), the connector (9) having no ground terminal.

10. A device according to claim 5 and claim 8, wherein the third switch (25) is open or closed by the movable control element (21), the movable element (21) being actuated by the ground terminal (14) of the outlet connector (8).

11. A device according to claim 1, further comprising indicator means (37, 38) connected to the detector member (21, 22, 24) so as to generate a signal indicating the presence or absence of ground.

12. A device according to claim 1, wherein the connection element (15) is a female terminal having a conductive portion situated inside the terminal in such a manner as to make physical contact impossible between the conductive portion and a user.

13. A protection device for protecting at least one piece of electrical apparatus (2) connected to a transmission line against a voltage surge generated by lightning striking the transmission line, the device comprising a plug connector (7) for connecting the device to an outlet connector (8) of a power supply network and a connection member (6) for connecting the apparatus (2) to the protection device, the connection member (6) being designed to connect the electrical apparatus to the transmission line via the protection device, the plug connector (7) including a connection element (15) for connection to a ground terminal (14) of the outlet connector (8) and the device including an discharge component (17) connected to the connection member and to the connection element (15) and arranged to evacuate to the ground terminal (14) a lightning current resulting from the surge, the device being **characterized in that** it further comprises one or more power connectors (9) for replicating the outlet connector (8), none of the connectors (9) having a ground terminal.
